# EUROPEAN PATENT APPLICATION

(11) **EP 3 848 192 A1**
(43) Date of publication of application: **14.07.2021**
(21) Application number: 20151081.5
(22) Date of filing: 10.01.2020
(51) Int. Cl.: B32B 3/08, B32B 27/12, B29C 70/28, A45C 5/03, A45C 13/36, B32B 27/32, B32B 27/36, B32B 27/40, B32B 5/02, B32B 27/30

(54) **THERMOPLASTIC COMPOSITE SHEET AND PREPARTION METHOD THEREFOR AND ARTICLE MADE THEREFROM**

(71) Applicant: Covestro Deutschland AG, 51373 Leverkusen (DE)
(72) Inventor: The designation of the inventor has not yet been filed
(74) Representative: Levpat

(57) **Abstract**

The present application relates to a thermoplastic composite sheet and a preparation method therefor and an article made therefrom. The thermoplastic composite sheet comprises an upper surface layer (11), a lower surface layer (13), and one or more intermediate layers (12) between the upper surface layer (11) and the lower surface layer (13) laminated together, and has an upper surface formed by the upper surface layer (11), a lower surface formed by the lower surface layer (13), and a first side (14), a second side (15), a third side (16) and a fourth side (17) adjacent in such an order. The thermoplastic composite sheet (1) has at least one first partial reinforcement region (18-21) close to an intersection of adjacent sides and at least one second partial reinforcement region (22-23) close to any side (14-17). The thermoplastic composite sheet of the present invention has partial reinforcement regions, and thus an article made therefrom becomes partially reinforced and has partially improved impact resistance and/or static load capacity, and a good balance among strength, rigidity and light weight without significant increase in the overall structural weight.

## Description

### FIELD OF THE INVENTION

The present invention relates to the technical field of composite manufacture. In particular, the present invention relates to a thermoplastic composite sheet and a preparation method therefor as well as an article made therefrom.

### BACKGROUND ART

Luggage cases (also known as a suitcase), including a trolley case, is carried for storing belongings during a travel. It is voluminous, easy to pull, and can greatly reduce traction force of users. That is why it is increasingly common for use.

In the early days, the luggage case was made from wood or other heavy materials. With the popularization of air travel, the material for luggage cases tends to be lighter hard plastics or cloth materials. In the current market of material for luggage cases, composites are one of those available for the manufacture of high-strength, high-hardness luggage cases. However, at the same time, high strength and high hardness often means that the luggage case is quite heavy.

The conventional process for manufacturing a luggage case from a carbon fiber reinforced composite generally involves the use of a thermosetting resin. For example, as stated in the Chinese Patent application CN109291467A, the thermosetting resin material can satisfy application requirements of strength, hardness, hydrolytical stability and pressure resistance. However, conventional molding processes, such as resin vacuum infusion, prepreg molding, and autoclave molding for thermosetting resin materials, require a long molding period which is more than 10 minutes in most cases, and thus leads to a quite high processing cost.

Luggage cases made from carbon fiber reinforced thermoplastic composites are products that have been gradually developed in recent years, and most of the luggage cases are manufactured using carbon fiber prepregs in the form of woven fabrics, unidirectional tape prepregs or a mixture of unidirectional tape prepregs and woven fabric prepregs. Before being manufactured into luggage cases, the above carbon fiber reinforced thermoplastic composites need to be stacked into flat plates and laminated into a sheet, and then hot pressed through a mold to form a semi-finished luggage case. As the woven fabric prepregs are usually woven from carbon fiber tows in two directions, such as 0 degree direction and 90 degree direction, and carbon fiber filaments in both directions have the same quantity, the sheet laminated by the woven fabric prepregs has almost the same mechanical strength in two fiber directions. For the sheet laminated by unidirectional prepregs, provided that the fiber directions are symmetrical relative to the intermediate layer of the sheet, the fiber direction of each layer can be designed, for example, 0°/90°/90°/0° or 0°/90°/0°/90°/0°. Asymmetrical lamination may cause warpage of composite sheets and parts. Take the 0°/90° lamination as an example, since fibers are uniformly distributed in the 0 degree direction of the sheet, different regions have the same mechanical strength along the 0 degree direction, and the same is true for the 90 degree direction. Therefore, the unidirectional tape sheet has uniform thickness and mechanical properties in certain fiber direction.

When manufacturing luggage cases from continuous fiber reinforced thermoplastic composites, the general practice is first laminating thinner woven fabric prepregs or unidirectional tape prepregs (the prepreg described herein is a composite of a thermoplastic resin matrix and a reinforcement material formed by impregnating continuous fibers or fabrics with the thermoplastic resin matrix under strictly controlled conditions, the prepreg formed by impregnating woven fabric continuous fibers is called a woven fabric prepreg, and the prepreg formed by impregnating parallel continuous fibers is called a unidirectional prepreg), and hot-pressing them to form a continuous fiber reinforced composite sheet with certain thickness, then manufacturing the composite sheet into a semi-finished luggage case by the hot press molding technique, and finally assembling it with other fabrics or leather materials to form a complete luggage case.

For example, five layers of carbon fiber reinforced polycarbonate 3K woven fabric prepregs with a thickness of 0.25mm was piled up and subjected to a flat hot-pressing process to obtain a 1.25 mm thick woven fabric sheet (3K represents each bundle of fibers containing 3,000 filaments, and the 3K woven fabric represents a fabric woven from 3K carbon fiber tows). Next, the woven fabric sheet was placed in an infrared heating furnace with the temperature raised to 240 °C, and the resulting softened sheet was transferred to a hot pressing mold for luggage case within 10 seconds. Then, the hot pressing mold was quickly closed and applied with pressure while the mold temperature was raised to 180 °C and maintained for 1 minute. Later, the mold was cooled to 90 °C, and was opened to take out a semi-finished luggage case shell which is then trimmed and assembled with some fabrics, a draw bar and the like to form complete luggage case.

In order to pass the dropping hammer test and the loaded dropping test for luggage cases, the luggage cases made from a carbon fiber reinforced thermoplastic resin are often made with a high thickness, which prevents it from being lightweight.

During the transportation of the luggage case, especially when the luggage case falls from a high altitude, there is usually a strong impact on parts of the luggage case, resulting in these parts prone to crack.

The prior arts have not disclosed any partially reinforced luggage cases.

### SUMMARY OF THE INVENTION

An object of the present invention is to provide a partially reinforced luggage case.

Another object of the present invention is to provide a thermoplastic composite sheet for the manufacture of a partially reinforced luggage case.

Thus, according to a first aspect of the present invention, there is provided a thermoplastic composite sheet comprising an upper surface layer, a lower surface layer, and one or more intermediate layers between the upper surface layer and the lower surface layer laminated together, and having an upper surface formed by the upper surface layer, a lower surface formed by the lower surface layer, and a first side, a second side, a third side and a fourth side adjacent in such an order, wherein the thermoplastic composite sheet has at least one first partial reinforcement region close to at least one intersection of adjacent sides and at least one second partial reinforcement region close to at least one side.

According to a second aspect of the present invention, there is provided a method for preparing the thermoplastic composite sheet mentioned above, comprising laminating together the upper surface layer, the one or more intermediate layers, the lower surface layer, the at least one first partial reinforcement region and the at least one second partial reinforcement region.

According to a third aspect of the invention, there is provided an article made from the thermoplastic composite sheet mentioned above.

The thermoplastic composite sheet of the present invention has partial reinforcement regions, and thus an article prepared therefrom becomes partial reinforced and has partially improved impact resistance and/or static load capacity, and a good balance among strength, rigidity and light weight without significant increase in the overall structural weight of the final product.

### BRIEF DESCRIPTION OF THE DRAWINGS

The present invention will be described and explained below in more details in conjunction with the drawings. In the drawings, the same numbers represent the same referents:
Fig. 1 shows a schematic view of a thermoplastic composite sheet according to one embodiment of the present invention;
Fig. 2 shows the size of each partial reinforcement region and the position thereof relative to each side of a thermoplastic composite sheet according to one embodiment of the present invention;
Fig. 3 shows an exploded view of a thermoplastic composite sheet according to one embodiment of the present invention.

### DETAILED DESCRIPTION OF THE INVENTION

Some embodiments of the present invention are now described in reference to the drawings for the purpose of illustration rather than limitation.

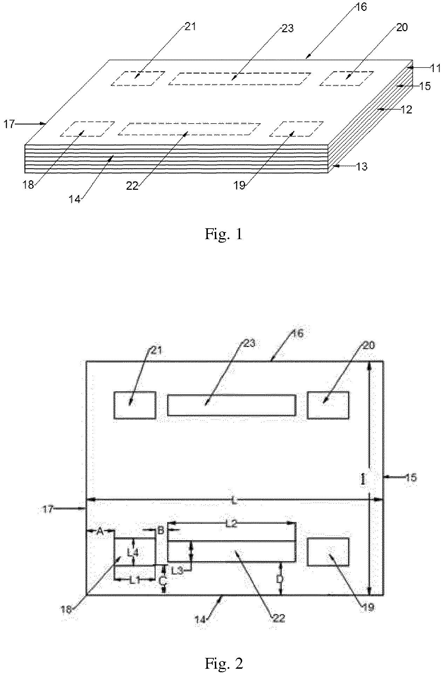

Referring to Fig. 1, according to the first aspect of the present invention, there is provided a thermoplastic composite sheet (1) comprising an upper surface layer (11), a lower surface layer (13), and one or more intermediate layers (12) between the upper surface layer (11) and the lower surface layer (13) laminated together, and having an upper surface formed by the upper surface layer (11), a lower surface formed by the lower surface layer (13), and a first side (14), a second side (15), a third side (16) and a fourth side (17) adjacent in such an order, wherein the thermoplastic composite sheet (1) has at least one first partial reinforcement region (18-21) close to at least one intersection of adjacent sides (14-17) and at least one second partial reinforcement region (22-23) close to at least one side (14-17).

In some embodiments, the thermoplastic composite sheet (1) comprises an upper surface layer (11), a lower surface layer (13), and one or more intermediate layers (12) between the upper surface layer (11) and the lower surface layer (13) laminated together, and has an upper surface formed by the upper surface layer (11), a lower surface formed by the lower surface layer (13), and a first side (14), a second side (15), a third side (16) and a fourth side (17). It has at least four first partial reinforcement regions (18-21) each close to each intersection of adjacent sides, respectively, and at least two second partial reinforcement regions (22-23) each close to the first side (14) and the third side (16), respectively.

Preferably, the upper surface layer (11), the intermediate layer (12) and the lower surface layer (13) have aligned edges.

Preferably, the upper surface layer (11), the intermediate layer (12) and the lower surface layer (13) of the thermoplastic composite sheet (1) are simultaneously rectangular or square.

In some embodiments, the upper surface layer (11), the intermediate layer (12) and the lower surface layer (13) of the thermoplastic composite sheet (1) have aligned edges and are rectangular, and the second partial reinforcement regions (18-21) are close to the sides where the upper surface layer (11), the intermediate layer (12) and the lower surface layer (13) have aligned long edges.

The at least one first partial reinforcement region (18-21) is located in any one or more layers of the one or more intermediate layers (12). Preferably, the at least one first partial reinforcement region (18-21) has the same thickness as the intermediate layer in which it is located.

Preferably, the intermediate layer (12) has two or more layers, such as 2 to 18 layers, preferably 2 to 8 layers.

Preferably, the upper surface layer (11) has a thickness of 0.1 to 0.25 mm, preferably 0.15 to 0.25 mm, more preferably 0.15 to 0.2 mm.

Preferably, the one or more intermediate layers (12) each independently has a thickness of 0.1 to 0.25 mm, preferably 0.15 to 0.25 mm, more preferably 0.15 to 0.2 mm.

Preferably, the lower surface layer (13) has a thickness of 0.1 to 0.25 mm, preferably 0.15 to 0.25 mm, more preferably 0.15 to 0.2 mm.

Preferably, each of the first partial reinforcement regions has a thickness of 0.1 to 0.25 mm, preferably 0.15 to 0.25 mm, more preferably 0.15 to 0.2 mm.

Preferably, each of the second partial reinforcement regions has a thickness of 0.1 to 0.25 mm, preferably 0.15 to 0.25 mm, more preferably 0.15 to 0.2 mm.

Preferably, the thermoplastic composite sheet has a thickness of 1.0 to 2.0 mm, preferably 1.0 to 1.5 mm.

The at least one second partial reinforcement region (22-23) is located between any two adjacent layers among the upper surface layer (11), the one or more intermediate layers (12), and the lower surface layer (13). Preferably, the at least one second partial reinforcement region (22-23) has substantially the same distance from the upper surface layer (11) as from the lower surface layer (13).

For example, where the one or more intermediate layers (12) have even layers such as 6 layers, preferably the at least one second partial reinforcement region (22-23) is located between the third intermediate layer and the fourth intermediate layer from top to bottom.

For example, where the one or more intermediate layers (12) have odd layers such as 7 layers, preferably the at least one second partially reinforced region (22-23) is located between the fourth intermediate layer and the fifth intermediate layer from top to bottom.

As used herein, "two adjacent layers" refers to layers that are in contact with each other in regions other than the second partial reinforcement regions.

Preferably, the at least one first partial reinforcement region (18-21) and the at least one second partial reinforcement region (22-23) are arranged such that the entire thermoplastic composite sheet has substantially a symmetrical structure relative to the intermediate layers.

Preferably, the at least one first partial reinforcement region (18-21) each accounts for 1-3% of the entire thermoplastic composite sheet, calculated according to the projected area on the upper surface layer (11).

Preferably, the at least one second partial reinforcement region (22-23) each accounts for 3-10% of the entire thermoplastic composite sheet, calculated according to the projected area on the upper surface layer (11).

A person skilled in the art can determine the distance from the first partial reinforcement region (18-21) to each side, and the distance from the second partial reinforcement region (22-23) to each side, according to subsequent processing, so that in the resulting processed and molded product, the regions often subjected to impact, collision or heavy loads are reinforced.

For example, referring to Fig. 2, when a thermoplastic composite sheet is used for preparation of luggage cases, the thermoplastic composite sheet (1) has four first partial reinforcement regions (18-21) and two second partial reinforcement regions (22-23) symmetrically arranged. Only the size of each partial reinforcement region and the position thereof relative to each side are illustrated herein.

The distance (A) from the first partial reinforcement region (18) to the fourth side (17) is 3% to 5% of the length (L) of the first side (14), the distance (C) to the first side (14) is 3% to 5% of the length (1) of the fourth side (17), the length (L4) on the fourth side is 10% to 15% of the length (1) of the fourth side (17), and the length (L1) on the first side is 10% to 15% of the length (L) of the first side (14).

The size of the first partial reinforcement region (18) and its distance to the adjacent sides are applicable to the size of other first partial reinforcement regions (19-21) and their distance to the adjacent sides.

The distance (B) from the second partial reinforcement region (22) to the first partial reinforcement region (18) is from 2% to 4% of the length (L) of the first side (14), the distance (D) to the first side (14) is from 8% to 12% of the length (1) of the fourth side (17), the length (L3) on the fourth side (17) is from 8% to 15% of the length (1) of the fourth side (17), and the length (L2) on the first side is from 40% to 60% of the length (L) of the first side (14).

The size of the second partial reinforcement region (22) and its distance to the adjacent side(s) are applicable to the size of the other second partial reinforcement region (23) and its distance to the adjacent sides.

In some embodiments, the upper surface layer (11), the lower surface layer (13), and the at least one first partial reinforcement region are each independently formed from a polymer material selected from the group consisting of: polycarbonate, polyurethane, and polymethyl methacrylate and polypropylene. Preferably, the upper surface layer (11), the lower surface layer (13) and the at least one first partial reinforcement region are formed from the same polymer material.

In some embodiments, the one or more intermediate layers (12) and the at least one second partial reinforcement region (22-23) are each independently formed from a fiber reinforced resin composite selected from the group consisting of: a carbon fiber reinforced polycarbonate composite, a carbon fiber reinforced thermoplastic polyurethane composite, a carbon fiber reinforced polymethyl methacrylate composite, a carbon fiber reinforced polypropylene composite, a Kevlar fiber reinforced polycarbonate composite, a Kevlar fiber reinforced thermoplastic polyurethane composite, a Kevlar fiber reinforced polymethyl methacrylate composite, and a Kevlar fiber reinforced polypropylene composite; preferably, the one or more intermediate layers (12) and the at least one second partial reinforcement region (22-23) are formed from the same fiber reinforced resin composite.

In some embodiments, all of the upper surface layer (11), the lower surface layer (13) and the at least one first partial reinforcement region are formed from a polycarbonate resin; all of the one or more intermediate layers (12) and the at least one second partial reinforcement region (22-23) are formed from a fiber reinforced resin composite selected from the group consisting of a carbon fiber reinforced polycarbonate composite and a Kevlar fiber reinforced polycarbonate composite.

In some embodiments, all of the upper surface layer (11), the lower surface layer (13), and the at least one first partial reinforcement region are formed from polyurethane; all of the one or more intermediate layers (12) and the at least one second partial reinforcement region (22-23) are formed from a fiber reinforced resin composite selected from the group consisting of a carbon fiber reinforced polyurethane composite and a Kevlar fiber reinforced polyurethane composite.

In some embodiments, all of the upper surface layer (11), the lower surface layer (13), and the at least one first localized reinforcing region are formed from polymethyl methacrylate; all of the one or more intermediate layers (12) and the at least one second partial reinforcement region (22-23) are formed from a fiber reinforced resin composite selected from the group consisting of a carbon fiber reinforced polymethyl methacrylate composite and a Kevlar fiber reinforced polymethyl methacrylate composite.

In some embodiments, all of the upper surface layer (11), the lower surface layer (13), and the at least one first partial reinforcement region are formed from polypropylene; all of the one or more intermediate layers (12) and the at least one second partial reinforcement region (22-23) are formed from a fiber reinforced resin composite selected from the group consisting of a carbon fiber reinforced polypropylene composite and a Kevlar fiber reinforced polypropylene composite.

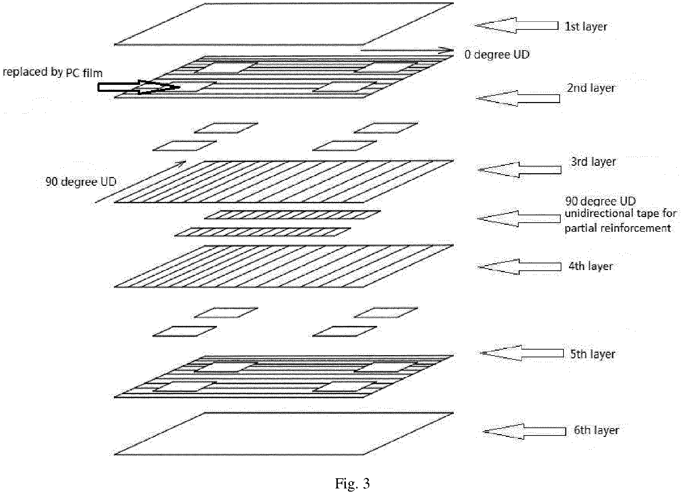

For example, as illustrated in Fig. 3, in one embodiment, the thermoplastic composite sheet exhibits a vertically symmetrical structure and is composed of the following layers:
The first layer (upper surface layer) is a PC film;
The second layer (intermediate layer) is a 0 degree carbon fiber reinforced polycarbonate unidirectional tape having four first partial reinforcement regions, wherein the first partial reinforcement regions are formed by cutting 0 degree carbon fiber reinforced polycarbonate unidirectional tape in four regions and replacing the cut regions with the PC film;
The third layer (intermediate layer) is a 90 degree carbon fiber reinforced polycarbonate unidirectional tape;
The fourth layer (intermediate layer) is the same as the third layer;
The fifth layer (intermediate layer), the same as the second layer, is a 0 degree carbon fiber reinforced polycarbonate unidirectional tape having four first partial reinforcement regions, wherein the first partial reinforcement regions are formed by partially cutting 0 degree carbon fiber reinforced polycarbonate unidirectional tape and replacing the cut regions with the PC film;
The sixth layer (lower surface layer) is the same as the first layer;
wherein all layers have aligned edges, and there are two second partial reinforcement regions between the third and fourth layers.

In the present application, polycarbonate can be used interchangeably with PC.

In the present application, polyurethane can be used interchangeably with PU.

In the present application, polymethyl methacrylate can be used interchangeably with PMMA.

In the present application, polypropylene can be used interchangeably with PP.

The above-mentioned carbon fiber reinforced polycarbonate composite, carbon fiber reinforced thermoplastic polyurethane composite, carbon fiber reinforced polymethyl methacrylate composite, carbon fiber reinforced polypropylene composite, Kevlar fiber reinforced polycarbonate composite, Kevlar fiber reinforced thermoplastic polyurethane composite, Kevlar fiber reinforced polymethyl methacrylate composite, and Kevlar fiber reinforced polypropylene composite, polycarbonate, polyurethane, polymethyl methacrylate and polypropylene are commonly used materials in the composite field.

Preferably, in the carbon fiber or Kevlar fiber reinforced resin composite, the content by volume of the fiber is 35% to 60%, preferably 40% to 55%, more preferably 44% to 50%.

The polyurethane described in the present application is thermoplastic polyurethane.

The thermoplastic composite sheet according to the present invention can be prepared by a lamination method commonly used in the art.

Therefore, according to the second aspect of the present invention, there is provided a method for preparing the thermoplastic composite sheet, comprising laminating together the upper surface layer (11), the one or more intermediate layers (12), the lower surface layer (13), the at least one first partial reinforcement region (18-21) and the at least one second partial reinforcement region (22-23).

Specifically, the thermoplastic composite according to the present invention can be prepared, for example, in the following manner:
In accordance with a preset CAD program, resin films and composite unidirectional tape prepregs are cut by an automatic cutting machine, wherein the resin films are used as the upper surface layer, the lower surface layer, and the first partial reinforcement region(s), and the composite unidirectional prepregs are used as the intermediate layer and the second partial reinforcement region(s). The cut unidirectional tape prepregs and resin films are grabbed by a mechanical arm with a suction cup, and then superimposed layer by layer according to the set program. The layers are temporarily fixed to one another by an ultrasonic welding torch on the mechanical arm. When automatic lamination and ultrasonic fixation are finished, the laminated composites are transferred to a flat hot-pressing machine, and then pressed into a composite sheet under high temperature and high pressure. After cooling, the composite sheet is conveyed to a cutting device for cutting and trimming the edges.

Since the mechanical arm has relatively high automation capability and positioning accuracy, it is possible to additionally apply the resin film or composite unidirectional prepregs with high precision to certain regions of the sheet, thereby achieving a partial reinforcement effect.

The bonding of layers by lamination is a method known in the art. A person skilled in the art can select suitable process parameters according to the materials used in each layer and the thickness of each layer.

In some embodiments, all of the upper surface layer (11), the lower surface layer (13), and the at least one first partial reinforcement region are formed from polycarbonate; all of the one or more intermediate layers (12) and the at least one second partial reinforcement region (22-23) are formed from a fiber reinforced resin composite selected from the group consisting of a carbon fiber reinforced polycarbonate composite and a Kevlar fiber reinforced polycarbonate composite; during lamination, the hot plate used has the a temperature of 200 to 260 °C, and a pressure of 1 to 2.5 MPa, and the heating time is 3 to 10 minutes.

In some embodiments, all of the upper surface layer (11), the lower surface layer (13), and the at least one first partial reinforcement region are formed from polyurethane; all of the one or more intermediate layers (12) and the at least one second partial reinforcement region (22-23) are formed from a fiber reinforced resin composite selected from the group consisting of a carbon fiber reinforced polyurethane composite and a Kevlar fiber reinforced polyurethane composite; during lamination, the hot plate used has the a temperature of 180 to 230 °C, and a pressure of 0.8 to 2 MPa, and the heating time is 3 to 10 minutes.

In some embodiments, all of the upper surface layer (11), the lower surface layer (13), and the at least one first localized reinforcing region are formed from polymethyl methacrylate; all of the one or more intermediate layers (12) and the at least one second partial reinforcement region (22-23) are formed from a fiber reinforced resin composite selected from the group consisting of a carbon fiber reinforced polymethyl methacrylate composite and a Kevlar fiber reinforced polymethyl methacrylate composite; during lamination, the hot plate used has the a temperature of 160 to 230 °C, and a pressure of 1 to 2.5 MPa, and the heating time is 3 to 10 minutes.

In some embodiments, all of the upper surface layer (11), the lower surface layer (13), and the at least one first partial reinforcement region are formed from polypropylene; all of the one or more intermediate layers (12) and the at least one second partial reinforcement region (22-23) are formed from a fiber reinforced resin composite selected from the group consisting of a carbon fiber reinforced polypropylene composite and a Kevlar fiber reinforced polypropylene composite; during lamination, the hot plate used has the a temperature of 200 to 215 °C, and a pressure of 0.8 to 1.5 MPa, and the heating time is 2 to 8 minutes.

The thermoplastic composite sheet according to the present invention can be used to prepare various articles, particularly articles requiring local reinforcement.

Therefore, according to the third aspect of the present invention, there is provided an article made from the thermoplastic composite sheet.

The article may be a case, preferably a luggage case.

A person skilled in the art can select suitable process parameters according to the materials used in each layer.

The descriptions of various features in the present application can be combined when there is no contradiction, and they all fall within the scope claimed by the present application.

The terms "comprising" and "including" described in present application cover the circumstances which further comprise or include other elements not specifically mentioned and the circumstances consisting of the elements mentioned.

Unless otherwise defined, all technical and scientific terms used herein have the same meaning as commonly understood by those skilled in the field the present invention belongs to. When the definition of a term in the present description conflicts with the meaning as commonly understood by those skilled in the field the present invention belongs to, the definition described herein shall apply.

Unless otherwise specified, all numerical values expressing amount of ingredients, reaction conditions and the like used in the description and claims are to be understood as being modified by the term "about". Accordingly, unless indicated to the contrary, the numerical values and parameters described herein are approximate values which are capable of being changed according to the desired performance obtained as required.

### Examples

The concept, specific structure and technical effects of the present invention will be further described below in conjunction with the examples and drawings so that those skilled in the art can fully understand the objects, features and effects of the present invention. It will be readily understood by those skilled in the art that the examples herein are for illustrative purposes only and the scope of the present invention is not limited thereto.

### Equipment used

### VLPH-200, 200 ton flat hot-pressing machine from Vigor Company:

Platform size: 660mm × 760mm, temperature range: from room temperature (25 °C) to 400 °C, platform flatness: ±0.5 mm, hot plate temperature uniformity: ±1.5 °C.

### HC-HG-28800 ultrasonic welding torch:

Power: 800 W, operating frequency: 28 KHz.

### KUKA KR 6 R900 robot:

Working radius: 900 mm, 6 axes, The maximum load: 6 kg, repetitive positioning accuracy: ±0.05 mm.

### Jingwei Technology BR03II cutting machine:

Translation speed: 800-1500 mm/s, cutting speed: 200-800 mm/s, repetitive accuracy ≤0.1 mm.

### Raw materials used

Polycarbonate (PC) film: having a thickness of 0.175 mm.

Carbon fiber reinforced polycarbonate unidirectional tape: having a thickness of 0.175 mm, and the content by volume of carbon fiber of 44%.

### Test methods used

In the Examples of the present application, the following test methods are carried out on a luggage case prepared using the thermoplastic composite sheet of the present invention:
Dropping Hammer Impact Test Method for Case and Bag was carried out according to QB/T 2918-2007, the hammer has the weight of 2-5 kg, and the dropping height of the hammer is 700 mm. The standard for passing the test is that there is no crack or deformation; the luggage case should be tested on both sides.

Dropping Test Method for Case and Bag was carried out according to QB/T 2921-2005, the load is 16 kg for a 19-21 inch luggage case, 18 kg for a 22-24 inch luggage case; 20 kg for a 25-28 inch luggage case; 25 kg for a 29-31 inch luggage case; 28 kg for a 32 inch or above luggage case; the dropping height of the flat panel of luggage case is 900 mm, and the dropping height of the edge and corner of luggage case is 600 mm. The standard for passing the test is that there is no cracking or deformation.

Static Load Resistance Test Method for Case and Bag was carried out according to QB/T 2155-2018, the load is 40 kg for a luggage case having a length ranging from 535 mm to 660 mm, and 60 kg for a luggage case having a length ranging from 685 mm to 835 mm, the duration is 4 hours. The standard for passing the test is that there is no cracking, deformation, or collapse.

### Inventive Example 1

### I: Preparation of Polycarbonate Composite Sheet

Referring to Fig. 3, the polycarbonate composite sheet to be prepared had a vertically symmetrical structure and was composed of the following layers:
The first layer (upper surface layer) was a PC film with a size of 650 mm × 750 mm;
The second layer (intermediate layer) was a 0 degree carbon fiber reinforced polycarbonate unidirectional tape having four first partial reinforcement regions, wherein the first partial reinforcement regions were formed by cutting 0 degree carbon fiber reinforced polycarbonate unidirectional tape in four regions and replacing the cut regions with the PC film, and they had a size of 90 mm × 78 mm, 32.5 mm away from the adjacent 0 direction side, and 30 mm away from the adjacent 90 direction side;
The third layer (intermediate layer) was a 90 degree carbon fiber reinforced polycarbonate unidirectional tape;
The fourth layer (intermediate layer) was the same as the third layer;
The fifth layer (intermediate layer) was the same as the second layer;
The sixth layer (lower surface layer) was the same as the first layer; wherein all layers have aligned edges, and there are two second partial reinforcement regions between the third and fourth layers, the second partial reinforcement regions being 90 degree carbon fiber reinforced polycarbonate unidirectional tapes, having a size of 375 mm × 52 mm, 65 mm away from the adjacent 0 direction side, and 22.5 mm away from the adjacent 90 direction side (calculated according to the distance between the projections on the upper surface layer).

First, the composite sheet was prepared in the following manner:
In accordance with a preset CAD program, polycarbonate resin films and composite unidirectional tape prepregs were cut by an automatic cutting machine. The cut unidirectional tape prepregs and resin film were grabbed by a mechanical arm with a suction cup, and then superimposed layer by layer according to the set program. The layers were temporarily fixed to one another by an ultrasonic welding torch on the mechanical arm. Given that the mechanical arm had relatively high automation capability and positioning accuracy, it was possible to additionally apply the resin film or composite unidirectional prepregs with high precision to certain regions of the sheet, thereby achieving a local reinforcement effect. When automatic lamination and ultrasonic fixation were finished, the laminated composites were transferred to a flat hot-pressing machine, and then pressed into a composite sheet under high temperature and high pressure. After cooling, the composite sheet was conveyed to a cutting device for cutting and trimming the edges. The process parameters of the flat hot-pressing machine were set as follows:
Hot plate temperature: 240 °C;
Hot plate pressure: 2 MPa;
Heating time: 8 minutes.

In the partial cut 0 degree carbon fiber reinforced polycarbonate unidirectional tape, the PC film was used to replace the cut regions.

### II: Preparation of Luggage Case

The first partial reinforcement regions were arranged corresponding to four corner positions of the luggage case, and the second partial reinforcement regions were arranged corresponding to edges in the lengthwise direction of the luggage case. The composite sheet was hot-pressed and molded by a hot press molding machine to form a semi-finished luggage case which was to be assembled into complete luggage case. The process parameters of the hot press molding machine were set as follows:

**Parameters for the hot press molding process**

| | |
|---|---|
| Infrared heating temperature (°C) | 260 |
| Heating time (min) | 4 |
| Material transfer time (s) | 20 |
| Clamping time (s) | 10 |
| Clamping force (T) | 150 |
| Pressure retention time (min) | 3 |
| Mold maximum temperature (°C) | 180 |
| Demolding temperature (°C) | 90 |

The Dropping Hammer Impact Test Method for Case and Bag was carried out according to QB/T 2918-2007, the hammer had the weight of 5 kg, and the dropping height of the hammer was 700 mm. It was found that the luggage case had no cracking and no deformation.

Dropping Test Method for Case and Bag was carried out according to QB/T 2921-2005 with a load of 16 kg, and at the dropping height of the flat panel of luggage case of 900 mm, and the dropping height of the edge and corner of luggage case of 600 mm. No cracking or deformation was observed.

The Static Load Resistance Test Method for Case and Bag was carried out according to QB/T 2155-2018 under a load of 40 kg for 4 hours. It was found that the luggage case had no cracking, deformation or collapse.

### Comparative Example 1

### I: Preparation of Polycarbonate Composite Sheet

The polycarbonate composite sheet to be prepared had a vertically symmetrical structure and was composed of the following layers:
The first layer (upper surface layer) was a PC film with a size of 650 mm × 750 mm;
The second layer (intermediate layer) was a 0 degree carbon fiber reinforced polycarbonate unidirectional tape;
The third layer (intermediate layer) was a 90 degree carbon fiber reinforced polycarbonate unidirectional tape;
The fourth layer (intermediate layer) was the same as the third layer;
The fifth layer (intermediate layer) was the same as the second layer;
The sixth layer (lower surface layer) was the same as the first layer; wherein all layers have aligned edges.

First, the composite sheet was prepared in the following manner:
In accordance with a preset CAD program, a Polycarbonate resin film and composite unidirectional tape prepregs were cut by an automatic cutting machine. The cut unidirectional tape prepregs and resin film were grabbed by a mechanical arm with a suction cup, and then superimposed layer by layer according to the set program. The layers were temporarily fixed to one another by an ultrasonic welding torch on the mechanical arm. When automatic lamination and ultrasonic fixation were finished, the laminated composites were transferred to a flat hot-pressing machine, and then pressed into a composite sheet under high temperature and high pressure. After cooling, the composite sheet was conveyed to a cutting device for cutting and trimming the edges. The process parameters of the flat hot-pressing machine were the same as those in Inventive Example 1.

### II: Preparation of Luggage Case

The thermoplastic composite sheet was hot-pressed and molded by a hot press molding machine to form a semi-finished luggage case which was to be assembled into complete luggage case. The process parameters of the hot press molding machine were the same as those described in Inventive Example 1.

The Dropping Hammer Impact Test Method for Case and Bag was carried out according to QB/T 2918-2007, the hammer had the weight of 5 kg, and the dropping height of the hammer was 700 mm. It was found that the sides of the luggage case were cracked.

Dropping Test Method for Case and Bag was carried out according to QB/T 2921-2005 with a load of 16 kg, and at the dropping height of the flat panel of luggage case of 900 mm, and the dropping height of the edge and corner of luggage case of 600 mm. It was found that the corners of the luggage case were cracked.

The Static Load Resistance Test Method for Case and Bag was carried out according to QB/T 2155-2018 under a load of 40 kg for 4 hours. It was found that the edges in the lengthwise direction of the luggage case were cracked, deformed and could not be restored.

It can be seen from a comparison of Inventive Example 1 and Comparative Example 1 that the composite sheet according to the present invention incorporated resin films on the basis of the original unidirectional tape prepregs, which renders improved impact resistance of the sheet in certain positions. Meanwhile, applying additional layers to partial regions further improves the load capacity of these regions at certain directions. While the overall structural weight is maintained without any significant increase, improving partial impact resistance and/or static load capacity in certain positions enables the final luggage case to have a good balance among strength, rigidity and light weight.

The exemplary embodiments or examples of the present invention have been described above, but are not intended to limit the present invention. For persons skilled in the art, various modifications and changes can be made to the present invention. Any modification, equivalent replacement and improvement, etc. made within the spirit and principle of the present invention shall be included within the scope of the claims of the present application.

## Claims

1. A thermoplastic composite sheet (1) comprising an upper surface layer (11), a lower surface layer (13), and one or more intermediate layers (12) between the upper surface layer (11) and the lower surface layer (13) laminated together, and having an upper surface formed by the upper surface layer (11), a lower surface formed by the lower surface layer (13), and a first side (14), a second side (15), a third side (16) and a fourth side (17) adjacent in such an order, wherein the thermoplastic composite sheet (1) has at least one first partial reinforcement region (18-21) close to at least one intersection of adjacent sides (14-17) and at least one second partial reinforcement region (22-23) close to at least one side (14-17).

2. The thermoplastic composite sheet according to claim 1, wherein the at least one first partial reinforcement region (18-21) is located in any one or more layers of the one or more intermediate layers (12); preferably, the at least one first partial reinforcement region (18-21) has the same thickness as the intermediate layer in which it is located.

3. The thermoplastic composite sheet according to claim 1 or 2, wherein the at least one second partial reinforcement region (22-23) is located between any two adjacent layers among the upper surface layer (11), the one or more intermediate layers (12) and the lower surface layer (13).

4. The thermoplastic composite sheet according to any one of claims 1 to 3, wherein the at least one first partial reinforcement region (18-21) each accounts for 1-2% of the entire thermoplastic composite sheet, calculated according to the projected area on the upper surface layer (11).

5. The thermoplastic composite sheet according to any one of claims 1 to 4, wherein the at least one second partial reinforcement region (22-23) each accounts for 3-9% of the entire thermoplastic composite sheet, calculated according to the projected area on the upper surface layer (11).

6. The thermoplastic composite sheet according to any one of claims 1 to 5, wherein the upper surface layer (11), the lower surface layer (13) and the at least one first partial reinforcement region are each independently formed from a polymer material selected from the group consisting of: polycarbonate, polyurethane, polymethyl methacrylate, and polypropylene; preferably, the upper surface layer (11), the lower surface layer (13), and the at least one partial reinforcement region (18-21) are formed from the same polymer material.

7. The thermoplastic composite sheet according to any one of claims 1 to 6, wherein the one or more intermediate layers (12) and the at least one second partial reinforcement region (22-23) are each independently formed from a fiber-reinforced resin composite selected from the group consisting of: a carbon fiber reinforced polycarbonate composite, a carbon fiber reinforced thermoplastic polyurethane composite, a carbon fiber reinforced polymethyl methacrylate composite, a carbon fiber reinforced polypropylene composite, a Kevlar fiber reinforced polycarbonate composite, a Kevlar fiber reinforced thermoplastic polyurethane composite, a Kevlar fiber reinforced polymethyl methacrylate composite, and a Kevlar fiber reinforced polypropylene composite; preferably, the one or more intermediate layers (12) and the at least one second partial reinforcement region (22-23) are formed from the same fiber reinforced resin composite.

8. The thermoplastic composite sheet according to any one of claims 1 to 5, wherein all of the upper surface layer (11), the lower surface layer (13) and the at least one first partial reinforcement region (18-21) are formed from polycarbonate; all of the one or more intermediate layers (12) and the at least one second partial reinforcement region (22-23) are formed from a fiber reinforced resin composite selected from the group consisting of a carbon fiber reinforced polycarbonate composite and a Kevlar fiber reinforced polycarbonate composite.

9. The thermoplastic composite sheet according to any one of claims 1 to 5, wherein all of the upper surface layer (11), the lower surface layer (13) and the at least one first partial reinforcement region (18-21) are formed from polyurethane; all of the one or more intermediate layers (12) and the at least one second partial reinforcement region (22-23) are formed from a fiber reinforced resin composite selected from the group consisting of a carbon fiber reinforced polyurethane composite and a Kevlar fiber reinforced polyurethane composite.

10. The thermoplastic composite sheet according to any one of claims 1 to 5, wherein all of the upper surface layer (11), the lower surface layer (13) and the at least one first partial reinforcement region (18-21) are formed from polymethyl methacrylate; all of the one or more intermediate layers (12) and the at least one second partial reinforcement region (22-23) are formed from a fiber reinforced resin composite selected from the group consisting of a carbon fiber reinforced polymethyl methacrylate composite and a Kevlar fiber reinforced polymethyl methacrylate composite.

11. The thermoplastic composite sheet according to any one of claims 1 to 5, wherein all of the upper surface layer (11), the lower surface layer (13) and the at least one first partial reinforcement region (18-21) are formed from polypropylene; all of the one or more intermediate layers (12) and the at least one second partial reinforcement region (22-23) are formed from a fiber reinforced resin composite selected from the group consisting of a carbon fiber reinforced polypropylene composite and a Kevlar fiber reinforced polypropylene composite.

12. A method for preparing a thermoplastic composite sheet according to any one of claims 1 to 11, comprising laminating together the upper surface layer (11), the one or more intermediate layers (12), the lower surface layer (13), the at least one first partial reinforcement region (18-21) and the at least one second partial reinforcement region (22-23).

13. An article made from the thermoplastic composite sheet according to any one of claims 1 to 11.

14. The article according to claim 13, which is a case such as a luggage case.
